# EUROPÄISCHE PATENTSCHRIFT

(11) **EP 0 901 897 B1**
(45) Veröffentlichungstag und Bekanntmachung des Hinweises auf die Patenterteilung: **29.01.2003**
(21) Anmeldenummer: 98810799.1
(22) Anmeldetag: 19.08.1998
(51) Int. Cl.: B29C 70/24, E01C 5/20

(54) **Stabile Unterlegplatten**
Stable underlay plates
Plaques de stabilité pour le sol

(30) Priorität: 26.08.1997 CH 198997
(43) Veröffentlichungstag der Anmeldung: 17.03.1999
(73) Patentinhaber: Scobalit AG, 8405 Winterthur (CH)
(72) Erfinder: Steger, Richard, 5040 Schöftland (CH)
(74) Vertreter: Patentanwälte Feldmann & Partner AG

(56) Entgegenhaltungen:
- EP-A- 0 361 796
- EP-A- 0 480 140
- FR-A- 2 642 772
- FR-A- 2 673 573
- US-A- 2 653 525
- US-A- 3 716 302

## Beschreibung

Die vorliegende Erfindung betrifft glasfaserverstärkte Kunststoffplatten nach dem Oberbegriff des Patentanspruches 1, die als stabile Unterlegplatten zum Einsatz gelangen.

Um den temporären Einsatz von nicht speziell angepassten Fahrzeugen auf weichem Untergrund zu ermöglichen, sind für zivile und militärische Zwecke Systeme aus Unterlegplatten oder -matten gebräuchlich.
Es sind zum Beispiel Unterlegsysteme aus geflochtenen Kunststoffmatten mit Verstärkungsstäben aus Metall bekannt, die verspannt werden müssen, um optimal belastbar zu sein. Diese Flechtmatten lassen sich zwar, solange die Stäbe beim Einsatz nicht verbogen worden sind, gut rollen und damit platzsparend lagern aber sie verschmutzen auf feuchtem Untergrund stark und saugen sich mit Wasser und Schlamm voll. Dies erschwert sowohl den Abtransport wie auch die Reinigung der Matten.
Andere Unterlegsysteme, die zum Beispiel aus gelochten oder wabenförmig versteiften Metallblechen, insbesondere Aluminiumblechen, bestehen müssen zwar nicht verspannt werden, aber sie haben den Nachteil, dass sie kaum elastisch verformbar sind. Werden sie beim Einsatz, zum Beispiel auf unebenem Untergrund, verbogen, so lassen sich die Verbindungen zwischen den Einzelelementen oft nicht mehr lösen, und die verbogenen Elemente lassen sich nur noch schlecht stapeln, was wiederum ihren schnellen und einfachen Abtransport und die Wiederverwendung erschwert oder unmöglich macht.

Unter der Bezeichnung MO-MAT System wurde schon vor über 30 Jahren von der Firma AIR LOG Ltd., North Lane, Alfershot, Hampshire, England ein wiederverwendungsfähiges Leichtgewichtsfahrbahnsystem für Sandküsten und Ufer angeboten. Das schon vor einigen Jahrzehnten entwickelte Fahrbahnsystem besteht aus einzelnen Platten von etwa 6 m², die lösbar miteinander verbunden werden können. Die einzelnen Platten bestehen aus mehreren Schichten von harzimprägnierten parallelfaserigen Glasfaserstoffen, die bei hohen Temperaturen unter hohem Druck verpresst worden sind. Die Platten besitzen eine waffelartige oder eierkartonförmige Struktur, gute Lastverteilungseigenschaften und sind sehr zugfest und dauerhaft. Die Glasfasern verlaufen innerhalb der einzelnen Schichten parallel zueinander. In der Draufsicht schneiden sich die Längsachsen der Fasern benachbarter Schichten rechtwinklig, das heisst in der Planarprojektion verlaufen alle Fasern in nur zwei Raumrichtungen. Die Platten mit diesem Aufbau sind als temporäre Fahrbahnen auf ungewöhnlich nachgiebigen und unsicheren Böden, wie zum Beispiel Sand, Morast, Schnee oder als Unterwasser-Fahrbahn geeignet. Im Laufe der Jahre wurden die Platten auch zur Konstruktion von temporären Hubschrauberlandeplätzen oder Rampen zum Wassern von Booten, als Rollbahnen und als Lagerflächen eingesetzt.
Aus der EP-A2-0'480'140 sind eikartonförmige Kunstharzplatten bekannt, welche mit Gestricken aus Glasfasern verstärkt sind. Ein Verfahren zum Herstellen der eikartonförmigen Strukturen ist ebenfalls beschrieben. Eine mit Kunstharz getränkte Gewebelage aus Glasfasergestrick wird zwischen zwei mit einer Vielzahl von regelmässig gegeneinander versetzten Fingern versehenen Formschalen eingebracht. Das Fasergestrick besitzt die nötige Elastizität um sich beim Zusammenpressen der Formschalen zwischen den Fingern zum gewünschten Eikartonmusters zu verformen. Zur Ausführung der Erfindung gemäss der EP-A2-0'480'140 ist es entscheidend, dass sich das Glasfasergestrick in alle Richtungen strecken lassen muss. Ein Nachteil der Verwendung von Glasfasergestrick liegt im aufwendigen Herstellungsverfahren und im damit verbunden hohen Preis.

All die eingangs genannten Nachteile von Flechtmatten- und Metallplatten weisen Glasfaserplatten nicht auf.
Da sich in den letzten Jahrzehnten das Gewicht von Schwerfahrzeugen, Hubschraubern und Flugzeugen vervielfacht hat, muss die Belastbarkeit eines solchen Plattensystemes für den Einsatz heutzutage viel höher sein, als dies noch in den 60er oder 70er Jahren nötig war. Die Stabilität der Platten muss gesteigert werden, ohne dass diese dadurch signifikant schwerer, steifer oder dicker werden.

Die enormen Anforderungen, die ein solches Plattensystem heutzutage erfüllen muss, werden beim Betrachten eines weiteren Einsatzgebietes deutlich. Bei Flugunfällen, bei denen Flugzeuge während des Startes oder der Landung über die befestigten Runways hinaus geraten und im unbefestigten Boden steckenbleiben, werden die Platten zuerst als schnell verlegbare Zufahrtswege für Tanklöschzüge und Rettungsfahrzeuge genutzt. Bei der anschliessenden Bergung der Flugzeuge dienen sie als Zufahrtswege und Standflächen für das schwere Bergungsgerät, sowie zum Rücktransport des havarierten Flugzeuges auf die befestigte Piste. Da durch die Sperrung einer Runway eines internationalen Verkehrsflughafens täglich Kosten in Millionenhöhe entstehen können, ist es von enormer Bedeutung die Bergung so schnell als möglich zu vollziehen, wobei dem Plattensystem eine entscheidende Rolle zukommt. Es muss schnell und einfach, am besten von wenigen Arbeitern verlegbar und wieder entfernbar sein und gleichzeitig dem Gewicht eines Verkehrsflugzeuges, im Extremfall eines vollbeladenen Grossraumjets, sowie den Druck- und Traktionskräften bei dessen Abtransport standhalten können.

Die Unterlegplatten dürfen dabei auf keinen Fall brechen, da dies nicht nur die Bergungsaktion zusätzlich verzögern würde, sondern auch Schäden an Fahrzeugen verursacht, oder schlimmstenfalls Personen verletzt werden könnten.

Die vorliegende Erfindung stellt sich daher die Aufgabe, ein Plattensystem zur Verfügung zu stellen, das die genannten Nachteile nicht aufweist. Die Platten sollen sehr hohen mechanischen Belastungen standhalten können, leicht verlegbar und leicht zu reinigen sein. Sie sollen auch stabil sein gegenüber Lösungsmitteln und chemischen Reagentien, wie Wasser und Petroleumderivaten. Diese Anforderungen müssen bei Temperaturen, wie sie in arktischen bis tropischen Zonen herrschen, erfüllt werden.

Diese Aufgabe wird durch eine Vorrichtung gemäss der kennzeichnenden Merkmale des Anspruches 1 gelöst. Weitere Ausführungsvarianten ergeben sich aus den abhängigen Ansprüchen. Die vorliegende Erfindung macht sich unter Beibehaltung einer bekannten Formgebung und unter Verwendung bekannter Materialien die Vorteile eines neuen inneren Aufbaus der Unterlegplatten zunutze. Die laminare Anordnung von Glasfasermatten mit parallelen Fasersträngen wurde dahingehend optimiert, dass die Längsachsen der Faserbündel aus verschiedenen Schichten in der Planarprojektion in mindestens drei verschiedenen Richtungen verlaufen. Da sich die Glasfasern, die der fertigen Platte die nötige mechanische Belastbarkeit verleihen, nicht dehnen lassen, und da die fertigen Platten eine im Querschnitt wellenförmige dreidimensionale Struktur aufweisen, ist es von entscheidender Bedeutung, dass das Glasfasermaterial im inneren der fertigen Platte optimal angeordnet ist. Diese besondere Art der Anordnung der Glasfasern verleiht der fertigen Platte eine sehr hohe Biegesteifigkeit, wobei sie sehr hohe maximale Biegekräfte aufnehmen kann und zudem eine sehr hohe Drucksteifigkeit besitzt.

In den Zeichnungen ist ein Ausführungsbeispiel des Erfindungsgegenstandes dargestellt und in der nachfolgenden Beschreibung erläutert. Es zeigt:
- Figur 1: eine schematisierte Teilansicht einer quergeschnittenen erfindungsgemässen Platte; und
- Figur 2: einen Teil eines schematisierten Querschnittes durch eine weitere Ausgestaltungsform der erfindungsgemässen Platte, wobei der Querschnitt der hinter der Zeichnungsebene liegenden Noppenreihe strichliniert angedeutet ist; und
- Figur 3: eine schematisierte Draufsicht auf einen Ausschnitt einer Platte gemäss Figur 1, wobei die erhobenen Eierkartonstrukturen als fette Kreise gezeichnet sind und die Verlaufsrichtungen der Faserbündel verschiedener Lagen von Glasfasergelegen als Geraden angedeutet sind; und
- Figur 4: eine Darstellung eines bei der Herstellung zu verwendenden Fasergeleges.

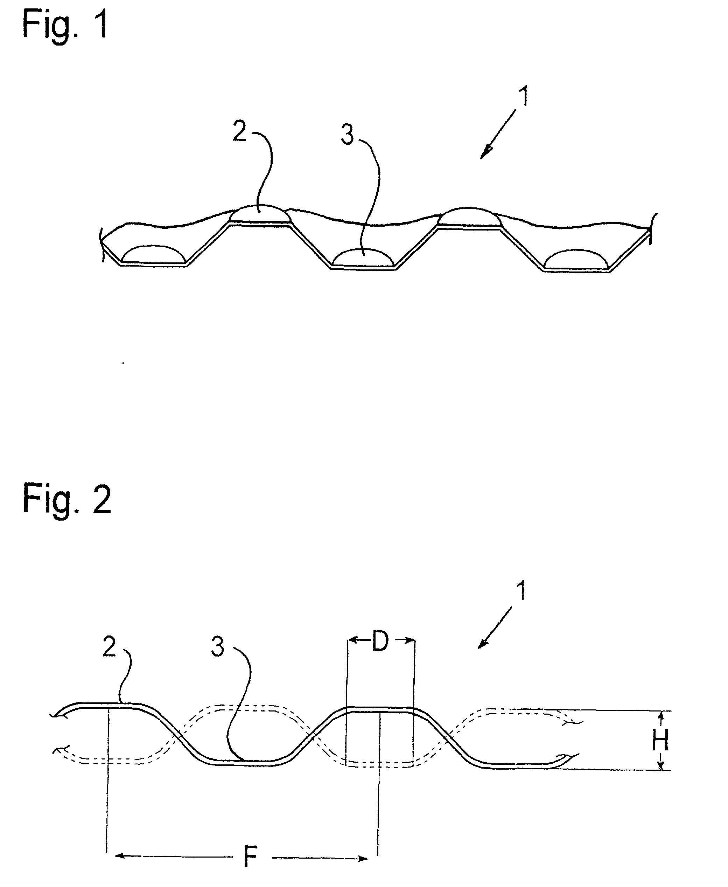

Die in Figur 1 ausschnittsweise dargestellte Platte besitzt eine typische eierkartonförmige Struktur, die sich im Querschnitt als wellenförmige Schnittkante zeigt, wobei die Wellen deutlich abgeplattet sind. Das regelmässig wiederholte Noppenmuster ermöglicht es, dass die erfindungsgemässen Platten formschlüssig überlappend verlegt oder gestapelt werden können. Wie im Querschnitt einer weiteren Ausgestaltungsform der erfindungsgemässen Platte in Figur 2 skizziert ist, beträgt die Dicke D der Platte zwischen 4 und 5 mm. Die Höhe H der Wellen, die auch der Gesamthöhe der Platte entspricht, liegt zwischen 10 und 20 mm. Das Wellenmuster wiederholt sich regelmässig alle 100 mm, das heisst die Strecke F zwischen den Mittelpunkten benachbarter Wellenberge oder -täler liegt bei 100 mm. Der Durchmesser D dieser abgeflachten Wellenberge und -täler beträgt etwa 30 mm.
Zur Herstellung der Platten werden beispielsweise metallische Formen mit regelmässig abwechselnden noppenartigen Positivund Negativerhebungen, die dieses Eierbechermuster formen, von einer Gesamtfläche von bis zu 8.0 x 3.7 m2 verwendet. Die Glasfasern werden auf bekannte Weise mit Epoxidharz getränkt und zwischen der Positiv- und der Negativform unter hohem Druck gepresst und anschliessend in der Form ausgehärtet.

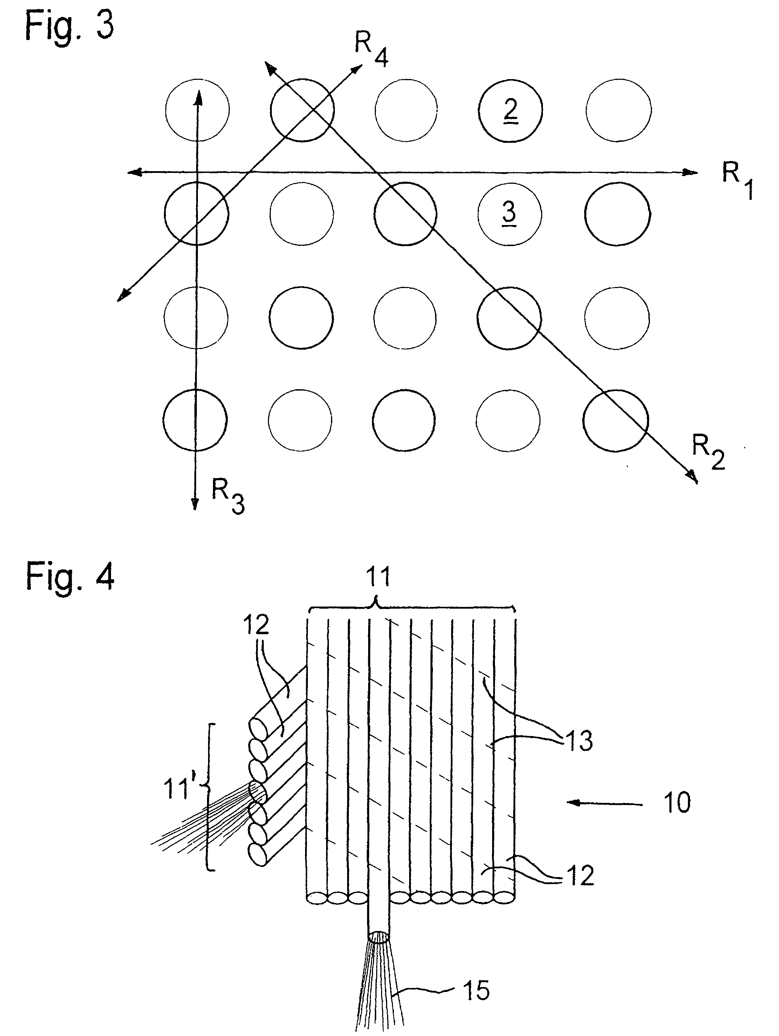

In der fertigen Platte liegen, zeigt mehrere, der in Figur 4 dargestellten, Matten 10 aus jeweils mindestens zwei Lagen von Glasfasergelegen 11, 11' übereinander. Jedes dieser Gelege 11, 11' besteht wiederum aus multifiliaren, untereinander lageverbundenen, Glasfasersträngen 12, die, wie der Name Gelege schon sagt, zwar untereinander durch Vernähen 13 mit Textil- oder Glasfasergarn verbunden sind, in denen die einzelnen Glasfaserstränge 12 aber nicht miteinander verwoben oder verknüpft sind. Die Faserstränge 12 einer Lage verlaufen nebeneinander und kreuzen sich nicht. Die Glasfaserstränge einer Matte sind derartig miteinander vernäht, dass die Faserstränge 12 relativ zueinander eine gewisse Beweglichkeit besitzen und die Gelege 11 drapierfähig genug bleiben, um in der metallischen Form gut drapiert werden zu können. Die gute Drapierfähigkeit der Glasfasermatte 10 in der Pressform ist entscheidend für die gleichmässige Verteilung der Fasern 15 beziehungsweise der Faserstränge 12 und damit für die gleichmässige Belastbarkeit der fertigen Platte.
Wird der Verlauf der Faserstränge der erfindungsgemässen Platte auf die Ebene projiziert, wie dies in der Figur 3 skizziert ist, so wird deutlich, dass diese in mindestens drei verschiedenen Richtungen verlaufen. In dem dargestellten Ausführungsbeispiel der vorliegenden Erfindung gibt es vier verschiedene Verlaufsrichtungen R₁, R₂, R₃ und R₄, wobei die Glasfaserstränge in aufeinanderfolgenden Lagen um jeweils 45° gegeneinander verdreht sind. Diese Art der Anordnung ermöglicht es, dass an jedem Punkt der fertigen Platte angreifende Kräfte von den äusserst zugfesten Glasfasern in acht Richtungen abgeleitet und dadurch sehr gut verteilt werden. Dieser positive Effekt kann natürlich auch dadurch erzielt werden, dass zwei Matten 10 aus zwei Gelegelagen 11, 11', in denen die Faserstränge 12 jeweils 90° zueinander verdreht sind, 45° gegeneinander verdreht übereinander gelegt werden.

Dem Fachmann ist klar, dass sich durch die Anzahl verwendeter Matten 10 und die Anzahl von Gelegelagen 11 in diesen, sowie die Variation der Verlaufsrichtungen der Glasfasern, respektive der Faserstränge eine Vielzahl von Ausgestaltungsformen der Erfindung realisieren lassen.

Die Einzelfasern in den Glasfasersträngen sind innerhalb einer Lage jeweils gleich dick und besitzen die gleiche Texzahl. Auch die Stärke der einzelnen Faserbündel innerhalb eines Geleges variiert kaum. Die Fasern innerhalb der einzelnen Faserstränge sind nicht gezwirnt und haben idealerweise eine Texzahl von 600 bis 1200 tex und ein Gewicht von 400 bis 500 g/m². Der Nähfaden 13 kann aus Glas oder textilem Material bestehen. Die Faserbündel jeder Matte sind locker miteinander vernäht, so dass die Glasfasermatten gut in der Pressform drapiert werden können, und sich beim Herstellungsprozess den noppenartigen Positiv- und Negativerhebungen gut anpassen lassen. Aus fertigungstechnischen Gründen ist es am sinnvollsten Glasfasermatten 10 mit zwei oder drei Lagen von Glasfaserstranggelegen 11, 11' bei der Plattenherstellung zu verwenden. Da es vorteilhaft ist, dass die Platten mehr als zwei Gelegelagen besitzen, kann die Anzahl der Lagen von Glasfasersträngen in der fertigen Platte durch die Anzahl der verwendeten Matten beliebig gewählt werden. Auf diese Art kann ebenso wie die Anzahl der Lagen von Glasfasersträngen, auch die Faserstärke und die Verlaufsrichtung der Fasern zwischen den einzelnen Lagen variiert werden.

Weitere vorteilhafte Ausführungsformen der vorliegenden Erfindung unterscheiden sich also von den oben beschriebenen Platten unter anderem durch ihre Dichte, die Verlaufsrichtung der Glasfaserbündel und den Glasgehalt.

Die Platten können sich zum Beispiel dahingehend unterscheiden, dass
A) die Faserstärke benachbarter Gelege innerhalb einer Matte unterschiedlich ist;
B) die Anzahl der Fasern benachbarter Gelege innerhalb einer Matte variiert;
C) die Faserstärke benachbarter Gelege innerhalb einer Matte gleichbleibt, sie sich aber in benachbarten Matten unterscheidet;
D) die Faseranzahl Pro Strang benachbarter Gelege innerhalb einer Matte gleichbleibt, sie sich aber in benachbarten Matten unterscheidet;
E) die Anzahl der Matten variiert.

Wie schon oben ausgeführt, ist ein wesentlicher Aspekt der vorliegenden Erfindung der Verlauf der Faserstränge in den verschiedenen Lagen einer Platte in mindestens drei verschiedenen Richtungen. Obwohl der laminare Aufbau des fertigen Produktes nicht mehr erkennen lässt, ob benachbarte Faserstrangschichten, respektive Gelege zur selben oder zu unterschiedlichen Matten gehören, und die Funktionalität des fertigen Produktes dadurch auch nur unwesentlich beeinflusst wird, spielt dieser Aspekt für die Herstellung der Matten eine wichtige Rolle.

Deshalb wird im Folgenden anhand der Fertigung der innere Aufbau der glasfaserverstärkten Platten noch genauer beschrieben.

Da die metallischen Formen für die herzustellenden Platten 1 im Normalfall rechteckig sind und die verwendeten Glasfasermatten normalerweise ebenfalls rechteckig sind, ist die Produktion dann am effizientesten, wenn die Glasfasermatten 10 so in der Form verlegt werden können, dass die Seitenkanten oder die Längsachsen von Form und Matte 10 parallel verlaufen. Die gesamte Fläche der Form kann dadurch mit den Matten 10 ganz ohne, oder mit einem Minimum an Zuschneidearbeit und Verschnitt abgedeckt werden.

Um die gewünschte Variation der Verlaufsrichtungen der Glasfaserstränge 12 in der fertigen Platte zu erreichen, empfiehlt es sich dementsprechend, dass:
A) die Verlaufsrichtung der Fasern und somit der Faserstränge 12 zweier benachbarter Lagen von Glasfasergelegen 11, 11' in einer Matte 10 unterschiedlich sind, und sie sich zudem von den Verlaufsrichtung der Fasern 15 in mindestens einer Lage einer anderen Matte 10 unterscheiden; oder
B) die Faserstränge 12 innerhalb einer Matte 10 in mindestens drei Richtungen verlaufen;
C) die Verlaufsrichtung der Fasern 15 zweier benachbarter Lagen von Glasfasergelegen 11, 11' in einer Matte 10 unterschiedlich sind, und mindestens eine Verlaufsrichung von der Längsachse der verwendeten Matte 10 abweicht.

Da die Glasfasern 15 nicht gedehnt werden können, ist die gute Drapierfähigkeit eine wesentliche Voraussetzung um Schäden an den Fasern und den Fasersträngen und eine ungleichmässige flächige Verteilung der Fasern im fertigen Produkt zu vermeiden.

Die fertige Platte besitzt eine geschlossenporige Oberfläche, so dass keine Flüssigkeiten oder Schmutzstoffe eindringen können. Die Platte kann sich also beim Einsatz auf feuchtem Untergrund oder bei Regen nicht mit Wasser vollsaugen, wodurch das Gewicht der Platte konstant bleibt, und der Abtransport nicht durch zusätzliches Gewicht erschwert wird. Die geschlossenporige Oberfläche erleichtert auch die Reinigung der Platten nach dem Einsatz. Idealerweise wird sie einfach mit einem Hochdruckreiniger abgespritzt.

Die erfindungsgemässen Platten besitzen eine hohe Biegesteifigkeit und biegen sich daher weniger durch, wenn sie auf weichem Untergrund verlegt sind und von schweren Fahrzeug befahren werden. Bei wiederholtem Befahren werden die Radfurchen dadurch weniger stark in den weichen Untergrund eingedrückt. Dies verringert wiederum die Gefahr, dass Fahrzeugboden, Differential oder Achsen den Scheitelpunkt der Fahrbahn berühren und diese dabei beschädigen. Bei bisher bekannten Platten ist es in solchen Situationen in der Regel nötig die Platten mit einem Unterbau abzustützen. Auf diese zusätzliche Stützkonstruktionen kann infolge der höheren Stabilität bei den erfindungsgemässen Platten verzichtet werden.

Die hohe Belastbarkeit bis zum Auftreten von Matrixrissen und zur inneren Delamination, bzw. im Extremfall bis zum Brechen, bewirkt die hohe Lebensdauer der Platten nach Anspruch 1 und auch die gleichbleibende Belastbarkeit. Hierzu ist eine einwandfreie Verbindung der Glasfasern mit der Kunststoffmatrix erforderlich. Diese kann erreicht werden, indem man Glasfasern verwendet, die mit einer Schlichte zur Verbesserung der Verbindung mit Kunststoff beschichtet sind. Die hohe Belastbarkeit der Platten nach Anspruch 1 bis zum Auftreten von Matrixrissen und zur inneren Delamination, bzw. im Extremfall bis zum Brechen bewirkt die hohe Lebensdauer und die wiederholte gleichbleibende Belastbarkeit. Hierzu ist eine einwandfreie Verbindung der Glasfasern mit der Kunststoffmatrix erforderlich. Dies kann erreicht werden, indem man Glasfasern verwendet, die mit einer Schlichte zur Verbesserung der Verbindung mit Kunststoff beschichtet ist.

## Patentansprüche

1. Glasfaserverstärkte Kunststoffplatten (1) mit regelmässigen, noppenartigen Positiv- (2) und Negativerhebungen (3), die so angeordnet sind, dass die Platten (1) formschlüssig überlappend verlegbar sind, wobei die Platte (1) einen Aufbau aus mehreren Lagen von aus Glasfasern (15) gefertigten Abschnitten von endlos gefertigten Matten aufweist, die in einer Kunstharzmatrix eingebunden sind,
**dadurch gekennzeichnet, dass** in der Platte mehrere Schichten von Matten (10) verlegt sind, die aus untereinander lageverbundenen (13) multifilaren Glasfasersträngen (12) gefertigt sind und dass die Glasfaserstränge (12) in der fertigen Platte in der Planarsicht in mindestens drei unterschiedlichen Richtungen (R₁ bis R₄) verlegt angeordnet sind.

2. Glasfaserverstärkte Kunststoffplatten nach Anspruch 1, **dadurch gekennzeichnet, dass** jede Matte (10) aus mindestens zwei Lagen von Glasfaserstranggelegen (11, 11') besteht, wobei in jeder Lage die Glasfaserstränge (12) untereinander parallel verlaufen, die Glasfaserstränge (12) von zwei aneinander grenzenden Lagen (11, 11') sich jedoch kreuzen.

3. Glasfaserverstärkte Kunststoffplatten nach Anspruch 1, **dadurch gekennzeichnet, dass** die Glasfasern (15) in den Strängen (12) ungezwirnt sind.

4. Glasfaserverstärkte Kunststoffplatten nach Anspruch 1, **dadurch gekennzeichnet, dass** die Glasfasern (15) mit einer die Verbindung mit dem Kunstharz verbessernden Schlichte versehen sind.

5. Glasfaserverstärkte Kunststoffplatten nach Anspruch 2 und 4, **dadurch gekennzeichnet, dass** mindestens eine Matte (10) eingelegt ist, die aus drei Lagen von Glasfaserstranggelegen (11, 11') besteht, bei der jedes Glasfaserstranggelege (11) eine gegenüber den beiden anderen Glasfasergelegen abweichende Richtung (R₁ bis R₄) aufweist.

6. Glasfaserverstärkte Kunststoffplatten nach Anspruch 5, **dadurch gekennzeichnet, dass** die Richtung der Glasfaserstränge (12) eines jeden Glasfasergeleges (11, 11') mit den beiden anderen Gelegen einen Winkel von 60° und 120° einschliesst.

7. Glasfaserverstärkte Kunststoffplatten nach Anspruch 5, **dadurch gekennzeichnet, dass** innerhalb einer Platte alle Matten (10) parallel verlegt sind.

8. Glasfaserverstärkte Kunststoffplatten nach Anspruch 1 **dadurch gekennzeichnet, dass** innerhalb einer Platte die Matten unterschiedliche (10) Verlegungsrichtungen aufweisen.

9. Glasfaserverstärkte Kunststoffplatten nach Anspruch 1 **dadurch gekennzeichnet, dass** die Glasfaserstrangstärken in allen Gelegen (11, 11') innerhalb einer Matte (10) gleich sind.

10. Glasfaserverstärkte Kunststoffplatten nach Anspruch 1 **dadurch gekennzeichnet, dass** die Glasfaserstrangstärken pro Gelege (11, 11') innerhalb derselben Matte (10) unterschiedlich sind.

11. Glasfaserverstärkte Kunststoffplatten nach Anspruch 9, **dadurch gekennzeichnet, dass** die Glasfaserstrangstärken in allen Gelegen (11) einer Matte (10) gleich sind, jedoch in derselben Platte Matten mit unterschiedlichen Glasfaserstrangstärken vorhanden sind.

12. Glasfaserverstärkte Kunststoffplatten nach Anspruch 1 **dadurch gekennzeichnet, dass** die Glasfaserstränge (12) einer Matte (10) zur Lageverbindung vernäht (13) sind.

## Claims

1. Glass-fibre reinforced plastic plates (1) with regular, nap-like positive (2) and negative (3) projections which are arranged such that the plates (1) may be layed overlapping with a positive fit, wherein the plate (1) has a construction of several layers of sections, manufactured of glass fibres, of endlessly manufactured mats which are integrated into a artificial resin matrix,
**characterised in that** several layers of mats (10) are layed in the plate, which are manufactured of multifilar glass fibre strands (12) connected amongst one another in layers, and that the glass fibre strands (12) in the manufactured plate in the planar view are arranged layed in at least three different directions (R₁ to R₄).

2. Glass fibre reinforced plastic plates according to claim 1, **characterised in that** each mat (10) consists of at least two layers of glass fibre strand layings (11, 11'), wherein in each layer the glass fibre strands (12) run parallel to each other, the glass fiber strands (12) of two layers (11, 11') bordering one another however intersect.

3. Glass fibre reinforced plastic plates according to claim 1, **characterised in that** the glass fibres (15) in the strands (12) are not threaded.

4. Glass fibre reinforced plastic plates according to claim 1, **characterised in that** the glass fibres (15) are provided with a coating improving the connection to the artificial resin.

5. Glass fibre reinforced plastic plates according to claim 2 and 4, **characterised in that** at least one mat (10) is layed which consists of three layers of glass fibre strand layings (11, 11') with which each glass fibre strand laying (11) has a direction (R₁ to R₄) which differs with respect to the two other glass fibre layings.

6. Glass fibre reinforced plastic plates according to claim 5, **characterised in that** the direction of the glass fibre strands (12) of each of the glass fibre layings (11, 11') encloses an angle of 60° and 120° with the other two layings.

7. Glass fibre reinforced plastic plates according to claim 5, **characterised in that** within one plate all mats (10) are layed parallel.

8. Glass fibre reinforced plastic plates according to claim 1, **characterised in that** within a plate the mats have different (10) laying directions.

9. Glass fibre reinforced plastic plates according to claim 1, **characterised in that** the glass fibre strand strengths in all layings (11, 11') are equal within a mat (10).

10. Glass fibre reinforced plastic plates according to claim 1, **characterised in that** the glass fibre strand strengths per laying (11, 11') are different within the same mat (10).

11. Glass fibre reinforced plastic plates according to claim 9, **characterised in that** the glass fibre strand strengths in all layings (11) of a mat (10) are equal, however in the same plate there are present mats with different glass fibre strand strengths.

12. Glass fibre reinforced plastic plates according to claim 1, **characterised in that** the glass fibre strands (12) of a mat are sewn (13) for layer connection.

## Revendications

1. Plaques en matière synthétique renforcées de fibres de verre (1) présentant des élévations positives (2) et négatives (3) régulières en forme de noppes, disposées de telle manière que les plaques (1) puissent être posées en se chevauchant de façon solidaire, la plaque (1) présentant une structure en plusieurs couches de sections de nattes en fibres de verre (15) fabriquées en continu, qui sont liées dans une matrice de résine synthétique, **caractérisées en ce que** plusieurs couches de nattes (10) sont posées dans la plaque qui sont faites d'écheveaux de fibres de verre (12) multifilaires liés entre eux en couche (13) et que dans la vue plane de la plaque finie, les écheveaux de fibres de verre (12) sont disposés dans au moins trois directions différentes (R₁ à R₄).

2. Plaques en matière synthétique renforcées de fibres de verre selon la revendication 1, **caractérisées en ce que** chaque natte (10) comporte au moins deux couches d'ensembles d'écheveaux de fibres de verre (11, 11'), les écheveaux de fibres de verre (12) dans chaque couche étant disposés parallèles les uns aux autres, alors que les écheveaux de fibres de verre (12) de deux couches (11, 11') adjacentes se croisent.

3. Plaques en matière synthétique renforcées de fibres de verre selon la revendication 1, **caractérisées en ce que** les fibres de verre (15) dans les écheveaux (12) ne sont pas retordues.

4. Plaques en matière synthétique renforcées de fibres de verre selon la revendication 1, **caractérisées en ce que** les fibres de verre (15) sont pourvues d'un apprêt améliorant la liaison avec la résine synthétique.

5. Plaques en matière synthétique renforcées de fibres de verre selon la revendication 2 et 4, **caractérisées en ce qu'**au moins une natte (10) comportant trois couches d'ensembles d'écheveaux (11, 11') est intercalée, chaque ensemble d'écheveaux de fibres de verre (11, 11') étant dirigée dans une direction différente (R₁ à R₄) des deux autres ensembles d'écheveaux de fibres de verre (11).

6. Plaques en matière synthétique renforcées de fibres de verre selon la revendication 5, **caractérisées en ce que** l'orientation des écheveaux de fibres de verre (12) de chaque ensemble de fibres de verre (11, 11') forme un angle de 60° et de 120° avec les deux autres ensembles.

7. Plaques en matière synthétique renforcées de fibres de verre selon la revendication 5, **caractérisées en ce qu'**à l'intérieur d'une plaque, toutes les nattes (10) sont posées de façon parallèle.

8. Plaques en matière synthétique renforcées de fibres de verre selon la revendication 1, **caractérisées en ce qu'**à l'intérieur d'une plaque, les nattes (10) sont posées dans des directions différentes.

9. Plaques en matière synthétique renforcées de fibres de verre selon la revendication 1, **caractérisées en ce que** les épaisseurs des écheveaux de fibres de verre sont les mêmes dans tous les ensembles (11, 11') à l'intérieur d'une natte (10).

10. Plaques en matière synthétique renforcées de fibres de verre selon la revendication 1, **caractérisées en ce que** les épaisseurs des écheveaux de fibres de verre (11, 11') de chaque ensemble à l'intérieur d'une natte (10) sont différentes.

11. Plaques en matière synthétique renforcées de fibres de verre selon la revendication 9, **caractérisées en ce que** les épaisseurs des écheveaux de fibres de verre sont les mêmes dans tous les ensembles (11) d'une natte (10), mais qu'une même plaque présente des nattes avec des épaisseurs d'écheveaux de fibres de verre différentes.

12. Plaques en matière synthétique renforcées de fibres de verre selon la revendication 1, **caractérisées en ce que** les écheveaux de fibres de verre (12)d'une natte (10) sont cousus (13) entre eux pour former une couche liée.
